# EUROPÄISCHE PATENTSCHRIFT

(11) **EP 1 554 177 B1**
(45) Veröffentlichungstag und Bekanntmachung des Hinweises auf die Patenterteilung: **09.06.2010**
(21) Anmeldenummer: 03785614.3
(22) Anmeldetag: 10.10.2003
(51) Int. Cl.: B65B 43/28, B65B 43/30, B31B 19/84

(54) **VORRICHTUNG UND VERFAHREN ZUM HANDLING VON ZWEI AUFEINANDERLIEGENDEN FOLIEN, UND MIT DEM VORGENANNTEN VERFAHREN HERGESTELLTER BEUTEL**
DEVICE AND METHOD FOR HANDLING TWO SUPERIMPOSED FILMS AND BAG PRODUCED ACCORDING TO SAID METHOD
PROCEDE ET DISPOSITIF POUR MANIPULER DEUX FEUILLES SUPERPOSEES ET SAC FABRIQUE SELON CE PROCEDE

(30) Priorität: 14.10.2002 DE 10247769; 15.04.2003 DE 10317375
(43) Veröffentlichungstag der Anmeldung: 20.07.2005
(60) Teilanmeldung: 10002138.5
(73) Patentinhaber: Fresenius Medical Care Deutschland GmbH, 61352 Bad Homburg v.d.H. (DE)
(72) Erfinder: MEISINGER, Matthias, 66583 Spiesen-Elversberg (DE); KUGELMANN, Franz, 66606 St. Wendel/Bliesen (DE)
(74) Vertreter: Laufhütte, Dieter
(86) Internationale Anmeldenummer: PCT/EP2003/011267
(87) Internationale Veröffentlichungsnummer: WO 2004/035444

(56) Entgegenhaltungen:
- EP-A- 1 086 804
- DE-A- 3 148 186
- DE-A- 3 326 616
- DE-A- 19 510 669
- FR-A- 2 716 868
- GB-A- 1 046 982
- US-A- 4 484 904
- PATENT ABSTRACTS OF JAPAN vol. 012, no. 152 (M-695), 11. Mai 1988 (1988-05-11) & JP 62 271726 A (TAKAO YOSHIDA), 26. November 1987 (1987-11-26)

## Beschreibung

Die Erfindung betrifft eine Vorrichtung und ein Verfahren zum Handling von zwei aufeinanderliegenden Folien, insbesondere Kunststoffschlauchfolien, mit einem Oberwerkzeug und einem gegenüberliegenden Unterwerkzeug. Das Handling betrifft dabei insbesondere das Trennen von Folien.

Schlauchfolien werden im Verpackungsbereich in großem Umfang verwendet. Im medizinischen Bereich werden sie bevorzugt zur Herstellung von Beutelsystemen herangezogen, die hohe Ansprüche hinsichtlich Sterilität und Partikelarmut stellen. Der Vorteil von Schlauchfolien liegt darin, daß die Folien in Folge des Herstellungsprozesses geschlossen und somit "keimfrei" produziert und gelagert werden können. Auch bleibt bei der weiteren Verarbeitung die Partikelbelastung im Inneren des Beutels äußerst gering, da nur an den jeweils spezifischen Stellen ein kurzzeitiger Zugang geschaffen werden muß, um einen Port einzubringen.

Bei der Verarbeitung der Schlauchfolien bereitet insbesondere das Öffnen der Folien, aufgrund der starken Hafteigenschaft der Folienseiten zueinander erhebliche Schwierigkeiten.

Im Stand der Technik sind bereits Vorrichtungen zum Trennen von zwei aneinanderliegenden Folien beschrieben. So ist aus der DE 43 15 685 A1 eine entsprechende Vorrichtung bekannt, bei der entsprechende Oberwerkzeuge bzw. Unterwerkzeuge oberhalb bzw. unterhalb der auseinander zu ziehenden Folienhälften angeordnet sind. Diese entsprechenden Oberwerkzeuge bzw. Unterwerkzeuge weisen Saugnäpfe auf, um die jeweiligen Folienhälften anzusaugen und durch Auseinanderbewegung der Saugnäpfe auseinander zu ziehen. Diese Vakuumsauger können allerdings nicht für alle Folientypen, aus denen die entsprechenden Schlauchfolien hergestellt sind, eingesetzt werden. Sie müssen in anderer Weise mechanisch geöffnet werden.

DE 3326 616 offenbart eine Vorrichtung zum Trennen von zwei aufeinander liegenden Folien gemäß dem oberbegriff des Anspruchs 1.

Aufgabe der Erfindung ist es, eine Vorrichtung zum Trennen von zwei aufeinanderliegenden Folien, insbesondere Kunststoffschlauchfolien, nach dem Oberbegriff des Anspruchs 1 derart weiterzubilden, daß die Folienhälften von Schlauchfolien unabhängig vom Folientyp und weitestgehend unabhängig von der Dicke der Folien sicher voneinander getrennt werden können.

Erfindungsgemäß wird die Aufgabe mittels einer gattungsgemäßen Vorrichtung mit einem Oberwerkzeug und einem gegenüberliegenden Unterwerkzeug durch die Kombination mit den Merkmalen des kennzeichnenden Teils des Anspruchs 1 gelöst. Demnach ist das Oberwerkzeug und das Unterwerkzeug jeweils als verschwenkbare Gabel ausgebildet, die zum Greifen von einer geöffneten in eine geschlossene Stellung überführbar sind. An den freien Enden der Gabeln sind jeweils Greifplatten ausgebildet und die Greifplatten weisen plane Auflageflächen und asymmetrisch ausgebildete Schneiden auf, sowie Ausnehmungen im Bereich hinter den Schneiden. Zum Auseinanderziehen der Folien wird das Oberwerkzeug und das Unterwerkzeug mit jeweils geöffneten Greifern auf die Folienoberfläche aufgesetzt. Die Greifer werden in eine geschlossene Stellung überführt, wobei die jeweiligen Schneiden in die Oberfläche des vergleichsweise weichen Kunststoffschlauchfolienmaterials eingedrückt werden. Das Kunststoffschlauchfolienmaterial wird so verdrängt und zwischen den Schneiden der sich gegenüberliegenden Greifer eingeklemmt, wobei das hinter den Schneiden liegende Material in entsprechende Ausnehmungen verdrängt wird. Das zwischen den Schneiden eingezwängte Material ermöglicht eine formschlüssige Verbindung, die bei entsprechendem Auseinanderbewegen von Oberwerkzeug und Unterwerkzeug zum sicheren Auseinanderziehen der Kunststoffschlauchfolien führt.

Erfindungsgemäße Ausgestaltungen der Erfindung ergeben sich aus den sich an den Hauptanspruch anschließenden Unteransprüchen. So kann im geschlossenen Zustand der verschwenkbaren Gabeln zwischen den aufeinander zugerichteten Schneiden ein bestimmter Abstand bestehen.

Vorteilhaft erstrecken sich die Schneiden bis in eine Ebene unterhalb der Auflagefläche der Greiferplatten. So wird sichergestellt, daß beim entsprechenden Aufsetzen der Greifplatten auf die Oberfläche des Kunststoffs die Schneide in das weiche Kunststoffschlauchfolienmaterial eingedrückt wird, so daß beim entsprechenden Schließen der Greifer die gewünschte Verformung der Kunststoffoberfläche eintritt.

Die Schneide läuft vorteilhaft in einem spitzen Winkel zusammen, ganz besonders vorteilhaft in einem Winkel von 10° - 45°.

Die Erfindung betrifft weiterhin ein Verfahren nach Anspruch 5.

Mit der erfindungsgemäßen Vorrichtung nach Anspruch 1 bzw. dem Verfahren nach Anspruch 5 können, wie im Folgenden dargestellt werden wird, in vorteilhafter Weise auch zwei Schläuche oder Ports in eine Schlauchfolienbahn eingeformt werden.

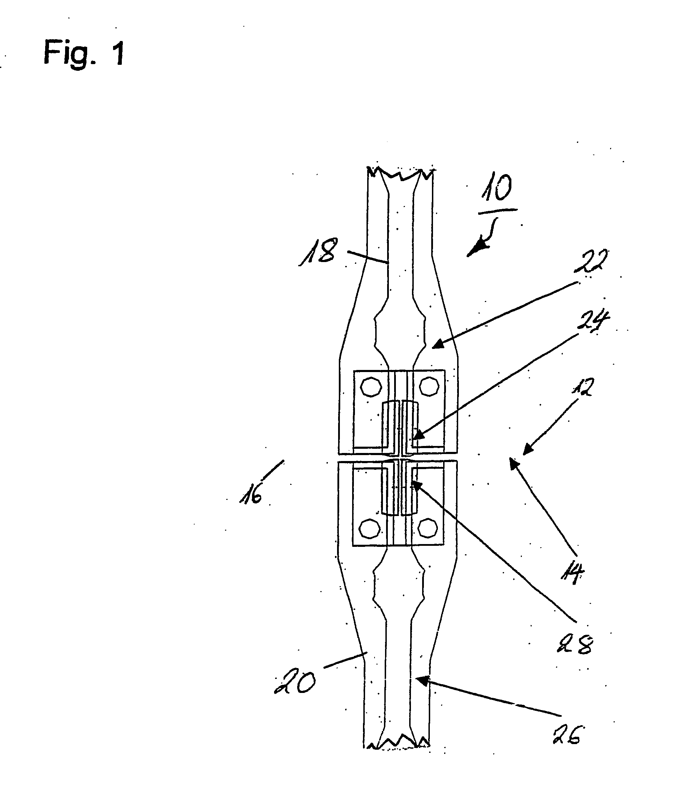

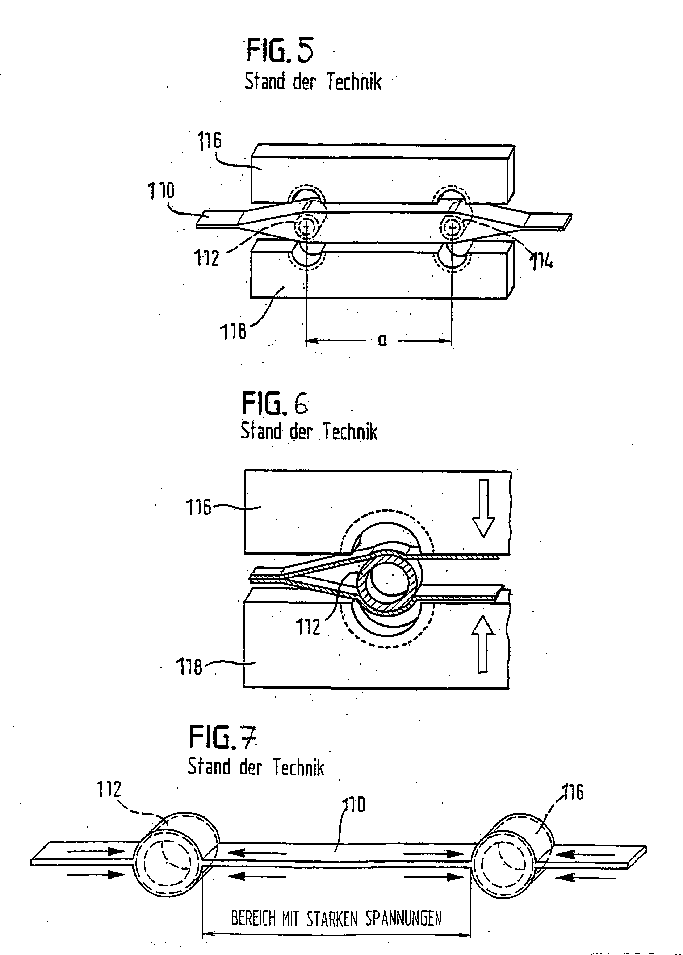

Nach dem Stand der Technik geschieht das Einformen mehrerer Schlauchanschlüsse oder Ports in der Regel in einem Arbeitsgang und mit einem Schweißwerkzeug. Dabei werden die Schlauchanschlüsse bzw. Ports gemeinsam einer offenen Seite einer Schlauchfolienbahn oder der unverschweißten Seite eines Beutels zugeführt und nach dem Öffnen des Beutels innerhalb der Folie plaziert. Dies wird anhand der Figurenabfolge in den Figuren 1 bis 3 gemäß der beigefügten Zeichnungen näher erläutert. In Fig. 5 sieht man die zwei Backen eines Schweißwerkzeuges 116 und 118 und zwei Schlauchabschnitte 112 und 114, die in einem bestimmten Abstand in einen Schlauchbeutel 110, der in der Mitte auseinandergezogen ist, eingeformt werden sollen. Der Abstand zwischen den Mittelpunkten der Schlauchabschnitte beträgt a. In Fig. 6 ist dargestellt, wie das Oberwerkzeug 116 bzw. das Unterwerkzeug 118 der Schweißwerkzeuge aufeinander zubewegt werden, um die Folien der Schlauchfolienbahn 110 mit dem Schlauch 112 bzw. dem Schlauch 114 (hier nicht dargestellt) zu verschweißen. Die Schlauchanschlüsse 112 und 114 werden hier also gemeinsam einer unverschweißten Seite der Schlauchfolienbahn bzw. eines vorgeschweißten Beutels zugeführt und nach dem Öffnen der Schlauchfolienbahn bzw. des Beutels innerhalb der Folie plaziert. Nach dem Schließen des Schweißwerkzeugs formen sich die Folien der Schlauchfolienbahn 110 um die Schläuche 112 und 114 und verschweißt diese unter Zuführung von Wärme. Der Nachteil dieses Verfahrens besteht darin, dass aus der zweidimensionalen Schlauchfolienbahn ein dreidimensionales Gebilde geformt werden muss. Um den Umfang von Schläuchen oder Einschweißteilen einzuformen, wird Folienmaterial aus den Randbereichen benötigt und vom Schweißwerkzeug auch teilweise eingezogen. Da aber zwischen den Schläuchen 112, 114 bzw. Ports kein Folienmaterial nachrutschen kann, da das sich schließende Schweißwerkzeug 116, 118 aufgrund der zur Schweißung nötigen Verpressung dies verhindert, bilden sich Dünnstellen in der Folie aus, d. h. Bereiche mit sehr hoher Eigenspannung am Schlauch oder Tiefziehungen. Diese Dünnstellen führen bei Belastung des Beutels zu vorzeitigem Versagen, d. h. zur Undichtigkeit bzw. zum Aufreißen an diesen belasteten Stellen. Anhand der Fig. 7 ist dies schematisch dargestellt. Hier ist im Bereich zwischen den eingeschweißten Schläuchen ein Bereich mit starken Spannungen dargestellt.

Durch die erfindungsgemäße Vorrichtung und das erfindungsgemäße Verfahren ergibt sich die Möglichkeit, das vorbekannte Verfahren zum Einformen von mindestens zwei Schläuchen oder Ports in eine Schlauchfolienbahn oder einen vorgefertigten Beutel dahingehend zu verbessern, dass die fertigen Beutel vergleichsweise höheren Belastungen standhalten.

Ein solches verbessertes Verfahren unter Verwendung der erfindungsgemäßen Vorrichtung umfasst im Einzelnen folgende Verfahrensschritte:
a) Erfassen der einzelnen Folien mit je einem Greifer mit Oberwerkzeug und Unterwerkzeug an den Stellen, an denen ein Schlauch oder Port eingeformt werden soll;
b) Auseinanderziehen der Folie mittels Oberstrich und Unterwerkzeug des Greifers an den vorgenannten Stellen;
c) Einschieben eines Schlauchs oder Ports im Bereich der auseinandergezogenen Folien und
d) Verbinden der Schläuche bzw. Ports mit den Folien.

Durch das Erfassen der einzelnen aufeinanderliegenden Folien mit je einem Greifer mit Oberwerkzeug und Unterwerkzeug können die Folien in dem Bereich, in dem die Schläuche bzw. Ports eingebracht werden sollen, gerade soweit auseinandergezogen werden, dass hier ein genügender Freiraum zum Einbringen der Schläuche bzw. Ports vorgegeben ist. Durch das lokale Auseinanderziehen sind also Öffnungsbereiche geschaffen, die im wesentlichen dem Außenumfang der in der Regel runden Schläuche bzw. Ports entsprechen. Damit ergibt sich beim Aufsetzen der Schweißbacken bereits ein geringerer Bedarf an Folienlänge, der zum Umfassen des Schlauchs bzw. Ports während des Schweißvorgangs notwendig ist. Hierdurch wird ein Dehnen der Folie beim Schweißvorgang weitestgehend verhindert.

Dabei ist es besonders vorteilhaft, wenn die Greifer nach dem jeweiligen Ergreifen der Schlauchfolienbereiche um einen bestimmten Betrag aufeinander zubewegt werden, so dass sich zwischen den Greifern und damit zwischen den später einzubringenden Schläuchen bzw. Ports eine Falte mit einem Folienvorrat bildet, der beim entsprechenden Schweißvorgang, d. h. dem entsprechenden Umgreifen der Schläuche bzw. Ports durch die Schweißbacken aufgebraucht werden kann. Hierdurch werden zusätzlich die Bereiche starker Spannungen zwischen den Schläuchen bzw. Ports vermieden.

Vorteilhaft werden die Schläuche bzw. Ports durch einen Schweißvorgang mit der sie umgebenden Folie verbunden.

Die Greifer erfassen die Folien vorteilhaft an einer Stelle, die den gewünschten späteren Abstand zwischen den Schläuchen bzw. Ports einerseits zuzüglich des Bereichs, um den die Greifer aufeinander zubewegt werden sollen, entspricht.

Weiterhin vorteilhaft wird eine Schlauchfolienbahn vor dem Ergreifen mit den jeweiligen Greifern bereits weitgehend in ihren Randbereichen verschweißt, wobei diejenigen Randbereiche freigelassen werden, die durch die Greifer zum Einbringen der Schläuche bzw. Ports freigelassen werden sollen. Hierdurch ist es sichergestellt, dass beim Aufziehen der Bereiche, in welche die Schläuche bzw. Ports eingeschoben werden sollen, nicht die Folien insgesamt voneinander getrennt werden, so dass tatsächlich nur der Bereich der Folien voneinander getrennt wird, der ungefähr dem Außendurchmesser des Schlauchs bzw. Ports entspricht.

Weitere Einzelheiten und Vorteile der Erfindung werden anhand eines in der Zeichnung dargestellten Ausführungsbeispiels näher erläutert. Es zeigen:
- Figur 1:: eine Gesamtdarstellung eines Ausführungsbeispiels der erfindungsgemäßen Vorrichtung in schematischer Darstellung,
- Figur 2:: ein Detail der Greifplatten der Vorrichtung gemäß Figur 1 in aufgesetzter aber noch geöffneter Stellung des Greifers,
- Figur 3:: die Greifplatten gemäß Figur 2 in geschlossener Stellung,
- Figur 4:: die Greifplatten gemäß Figur 2 und 3 in geschlossener und voneinander wegbewegter Stellung,
- Fig. 5 - 7:: Darstellungen des Verfahrens nach dem Stand der Technik wie es in der Beschreibungseinleitung erläutert wurde,
- Fig. 8:: die perspektivische schematische Darstellung einer Schlauchfolienbahn nach dem Ergreifen durch die Greifer,
- Fig. 9:: eine Darstellung gemäß Fig. 8, nachdem die Greifer um eine bestimmte Länge Δx aufeinander zubewegt sind und
- Fig. 10:: eine geschnittene perspektivische Darstellung des Randbereichs eines Beutels mit zwei eingeschweißten Schlauchstücken.

In Figur 1 ist eine Vorrichtung 10 zum Trennen einer oberen Folienlage 12 und einer unteren Folienlage 14 einer Kunststoffschlauchfolie 16 gezeigt. Die Vorrichtung 10 besteht aus einem Oberwerkzeug 18 zum Greifen der oberen Folienlage 12 und einem Unterwerkzeug 20 zum Greifen der unteren Folienlage 14. Das Oberwerkzeug 18 weist eine Greifgabel 22 auf, an der jeweils Greifplatten 24 angeordnet sind. Das Unterwerkzeug 20 weist eine Greifgabel 26 auf, an deren freien Enden jeweils Greifplatten 28 angeordnet sind.

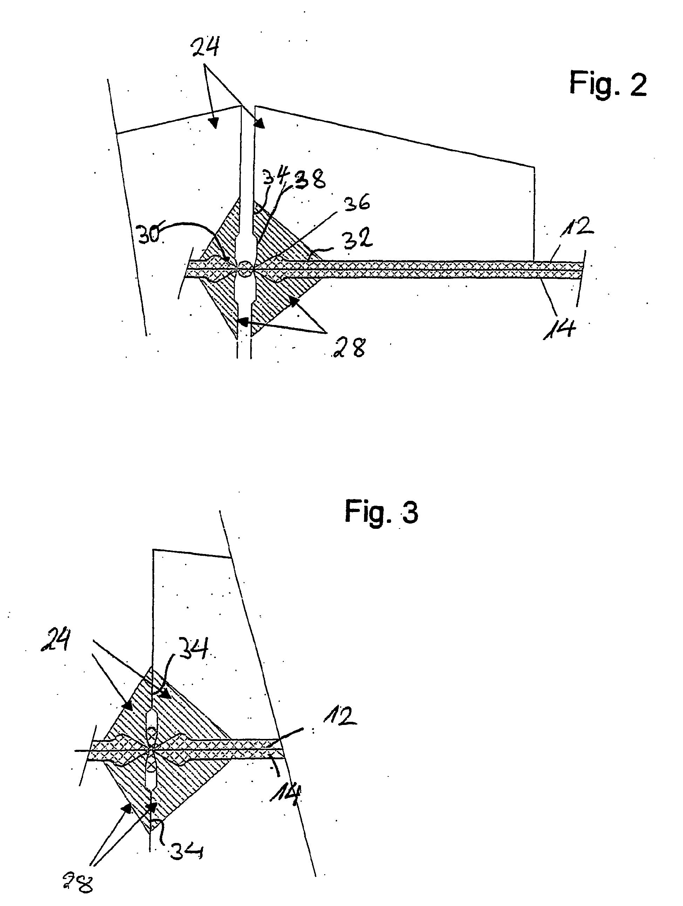

In Figur 2 werden die oberen Greifplatten 24 des Oberwerkzeugs 18 sowie die Greifplatten 28 des Unterwerkzeugs 20 im Detail dargestellt. Die Greifplatten 24 und 28 weisen jeweils asymmetrisch geformte Schneiden 30 auf, sowie plane Anlageflächen 32 in der Waagerechten bzw. 34 in der Senkrechten Ebene. Gegenüber der waagerechten Anlagefläche 32 bzw. der senkrechten Anlagefläche 34 sind jeweils zurückspringende Ausnehmungen 36 bzw. 38 vorgesehen. Wie in der Figur 2 dargestellt, sind die jeweiligen Schneiden 30 der vier Greifplatten aufeinander zugerichtet.

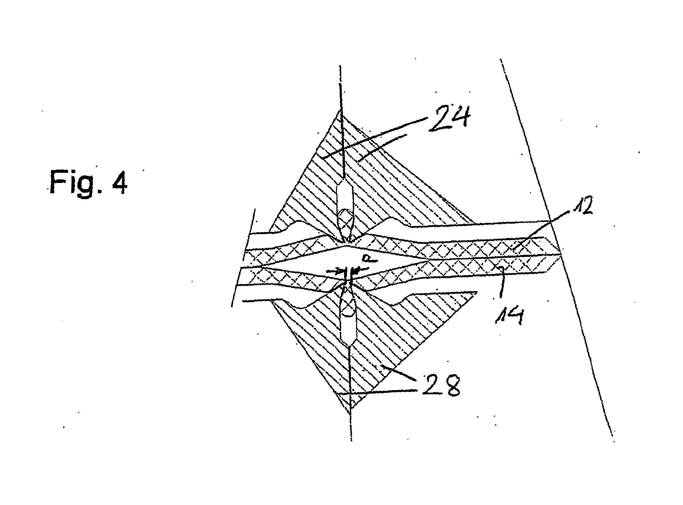

In Figur 2 sind die Greifplatten 24 bzw. 28 auf die Oberflächen der oberen Folienlage 12 bzw. der unteren Folienlage 14 aufgesetzt, so daß die jeweiligen waagerechten Anlageflächen 32 auf der Oberfläche der Schlauchfolie aufliegen. Die entsprechend über die Oberfläche 32 hinausragenden Schneiden 30 sind in dieser Stelle in den vergleichsweise weichen Kunststoff eingedrückt, so daß sich die Bereiche vor und hinter der Schneide entsprechend verformen und in die Ausnehmungen 36 bzw. 38 verdrängt werden. In der entsprechenden Figur 3 sind die senkrechten Anlageflächen 34 der Greifplatten 24 bzw. 28 aneinanderliegend dargestellt, da die Greifgabeln 22 bzw. 26 geschlossen sind. Es wird hier deutlich, dass zwischen den Schneiden in einem entsprechend kleinen Zwischenraum, der sich zur Ausnehmung 38 erweitert, Zwickel der oberen Folienlage 12 bzw. der unteren Folienlage 14 eingeklemmt sind. Aufgrund dieser stoffschlüssigen Einklemmung der Zwickel kann, wie in Figur 4 dargestellt, beim entsprechenden Auseinanderziehen von Oberwerkzeug 18 und Unterwerkzeug 20 die obere Folienlage 12 von der unteren Folienlage 14 getrennt werden.

Der Vorteil der Erfindung liegt darin, daß durch die besondere Schneidengeometrie problemlos Folien unterschiedlicher Dicke mit einer Einstellung geöffnet werden können. Erreicht wird das dadurch, daß die sich gegenüberstehenden Greifplatten 24 und 28, die sich mit ihrer waagerechten Anlagefläche 32 auf den zu öffnenden Folienlagen 12 und 14 abstützen können und deshalb unabhängig von der Foliendicke arbeiten. Gleiches gilt beim Zufassen der Schneiden. Hier stützen sich jeweils die senkrechten Anlageflächen 34 der gegenüberliegenden Greifer aufeinander ab und garantieren ein reproduzierbares Spaltmaß a und verhindern sicher das Durchtrennen der gegriffenen Folie. Die Geometrie der Greifplatte erleichtert durch die asymmetrische keilförmige Ausbildung der Schneide 30 das Eindringen in das Folienmaterial. Das verdrängte Folienmaterial schiebt sich zur einen Hälfte zwischen die Schneiden 30 und kann dadurch leicht gegriffen werden und verklemmt sich als Wulst an dem Hinterschnitt der Schneidenspitzen. Die andere Hälfte schiebt sich unter die Ausnehmung 36 der Greifplatte 24 bzw. 28. Somit wird ein Materialaufbau vermieden, der zur Verfälschung des Spaltmaßes (Foliendicke) führt. Der Kraftaufwand zur Betätigung der Greifergabeln 22 bzw. 26 konnte durch die gezielte Ausformung der Scheidengeometrie merklich reduziert und die Bauform des kompletten Greifersystems 10 auf eine sehr kleine Baugröße mit einer Breite von weniger als 50 mm begrenzt werden. Aufgrund der nur wenigen beweglichen Teile ist die Produktion vergleichsweise einfach und die Herstellkosten sind niedrig und der Betrieb des Folienöffners ist störungsarm.

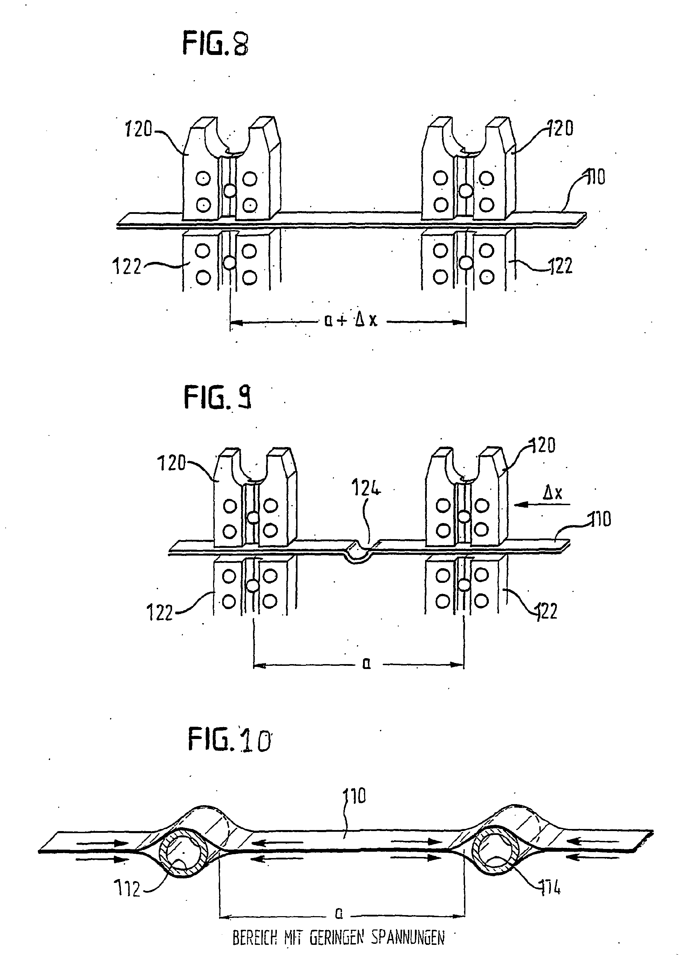

Gemäß Fig. 8 wird eine Schlauchfolienbahn 110 an zwei Stellen von Greiferpaaren 120, 122 erfasst, die um den Abstand a + Δx voneinander entfernt sind.

Die Greifer mit dem jeweiligen Oberwerkzeug 120 und dem Unterwerkzeug 122 entsprechen in Ihrem Aufbau denjenigen gemäß der deutschen Patentanmeldung DE 10247769.8-26 der Anmelderin.

Nach dem in Fig. 8 dargestellten Ergreifen der oberen bzw. unteren Folienlage der Schlauchfolienbahn 110 werden die beiden Greifer mit dem Oberwerkzeug 120 bzw. Unterwerkzeug 122 um eine Längendifferenz Δx aufeinander zubewegt, so dass sich im mittleren Bereich zwischen den beiden Greifern eine Folienseite 124 bildet. Nach entsprechendem Auseinanderziehen der Folien, werden Schläuche 112, 114 in die offenen Bereiche eingebracht. Wie in Fig. 10 vereinfacht dargestellt, sind die Folienbereiche, die um die Schläuche 112 und 114 aufgezogen sind vergleichsweise eng an das Schlauchäußere der Schläuche 112 und 114 angeschmiegt, so dass beim entsprechenden Umfassen der Schläuche mit den Schweißwerkzeugen zum Verschweißen der Folien 110 mit den Schläuchen 112 und 114 nur wenig Folienmaterial benötigt wird. Dieses Material wird aus der Folienfalte 124 geliefert, so dass zwischen den beiden Schläuchen 112 und 114 ein Bereich mit geringen Spannungen vorliegt. Gemäß dem erfindungsgemäßen Verfahren wird beim Einformvorgang der Folie um die Schläuche berücksichtigt, dass durch lokales Öffnen von unverschweißten Folienbereichen und einem anschließenden Raffvorgang bereits ein Einziehen der Folie aus den Randbereichen ermöglicht wird. Die nur schmal vorgesehene Öffnung je Schlauch im Beutel bzw. der Schlauchfolienbahn sorgt für ein enges Anschmiegen der Folie an der Schlauchwand nach dem Einschieben der Schläuche. Dadurch kann die einseitige Ausdehnung der Folie beim Schließen der Schweißwerkzeuge, die in der Fig. 10 nicht dargestellt sind, weitgehend vermieden werden.

## Patentansprüche

1. Vorrichtung zum Trennen von zwei aufeinanderliegenden Folien, insbesondere Kunststoffschlauchfolien, mit einem Oberwerkzeug (18) und einem gegenüberliegenden Unterwerkzeug (20)
**dadurch gekennzeichnet,**
**daß** das Oberwerkzeug (18) und das Unterwerkzeug (20) jeweils als verschwenkbare Greifergabel (22, 26) ausgebildet sind, die zum Greifen von einer geöffneten in eine geschlossene Stellung überführbar sind, daß an den freien Enden der Greifergabeln (22; 26) jeweils Greifplatten (24) ausgebildet sind und daß die Greifplatten (24; 28) plane Auflageflächen (32) und asymmetrisch ausgebildete Schneiden (30) aufweisen, sowie Ausnehmungen (36, 38) im Bereich hinter den Schneiden (30).

2. Vorrichtung nach Anspruch 1, **dadurch gekennzeichnet, daß** im geschlossenen Zustand der verschwenkbaren Gabeln (22) zwischen den aufeinander zu gerichteten Schneiden (30) ein Abstand (a) besteht.

3. Vorrichtung nach Anspruch 1 oder 2, **dadurch gekennzeichnet, daß** sich die Schneiden (30) bis in eine Ebene unterhalb der Auflageflächen (32) der Greifplatten (24, 28) erstrecken.

4. Vorrichtung nach einem der Ansprüche 1 bis 3, **dadurch gekennzeichnet, daß** die jeweilise (30) Schneide in einem spitzen Winkel α, vorzugsweise von 10° bis 45°, zusammenläuft.

5. Verfahren zum Trennen von zwei aufeinander liegenden Folien, insbesondere Kunststoffschlauchfolien, unter Verwendung einer Vorrichtung nach einem der Ansprüche 1 bis 4, **dadurch gekennzeichnet, daß** das Oberwerkzeug (18) und das Unterwerkzeug (20) mit jeweils geöffneten Greifergabeln (22, 26) auf die Folienoberfläche aufgesetzt werden, daß die Greifergabeln (22, 26) in eine geschlossene Stellung überführt werden, wobei die jeweiligen Schneideren (30) die Oberfläche der aufeinander liegenden Folien eingedrückt werden und daß das Oberwerkzeug (18) und das Unterwerkzeug (20) zum Trennen der beiden aufeinanderliegenden Folien auseinander gezogen werden.

## Claims

1. An apparatus for the separation of two films, in particular plastic bag films, lying on top of one another, comprising an upper tool (18) and an oppositely disposed lower tool (20),
**characterised in that**
the upper tool (18) and the lower tool (20) are each made as pivotable gripper forks (22, 26) which can be moved from an open position into a closed position for gripping; **in that** respective gripping plates (24) are formed at the free ends of the gripper forks (22, 26); and **in that** the gripping plates (24; 28) have planar support surfaces (32) and asymmetrically formed cutting edges (30) as well as cut-outs (36, 38) in the region behind the cutting edges (30).

2. An apparatus in accordance with claim 1, **characterised in that** there is a spacing (a) between the cutting edges (30) directed towards one another in the closed state of the pivotable forks (22).

3. An apparatus in accordance with either of claims 1 or 2, **characterised in that** the cutting edges (30) extend up to and into a plane below the support surface (32) of the gripping plates (24, 28).

4. An apparatus in accordance with one of the claims 1 to 3, **characterised in that** the respective cutting edge (30) converges at an acute angle α, preferably from 10° to 45°.

5. A method for the separation of two films, in particular plastic bag films, lying on top of one another using an apparatus in accordance with one of the claims 1 to 4, **characterised in that** the upper tool (18) and the lower tool (20) are placed onto the film surface with respectively opened gripper forks (22, 26); **in that** the gripper forks (22, 26) are moved into a closed position, with the respective cutting edges (30) being pressed into the surface of the films lying on top of one another; and **in that** the upper tool (18) and the lower tool (20) are drawn apart for the separation of the two films lying on top of one another.

## Revendications

1. Dispositif destiné à sectionner deux feuilles superposées, notamment des feuilles en gaine, avec un outil supérieur (18) et un outil inférieur (20) se trouvant en face l'un de l'autre,
**caractérisé en ce que**
l'outil supérieur (18) et l'outil inférieur (20) sont agencés chacun en fourche à grappin (22, 26) pivotante, qui, pour saisir, sont transférables d'une position ouverte en une position fermée, **en ce que**, aux extrémités libres respectives des fourches à grappin (22 ; 26), des plaques agrippantes (24) sont agencées et **en ce que** les plaques agrippantes (24 ; 28) présentent des surfaces d'appui (32) planes et des couteaux agencés asymétriquement (30), ainsi que des creux (36, 38) dans la zone derrière les couteaux (30).

2. Dispositif selon la revendication 1, **caractérisé en ce que** à l'état fermé des fourches pivotantes (22), il existe un écart (a) entre les couteaux (30) tournés l'un vers l'autre.

3. Dispositif selon la revendication 1 ou 2, **caractérisé en ce que** les couteaux (30) s'étendent jusqu'à un plan au-dessous des surfaces d'appui (32) des plaques agrippantes (24, 28).

4. Dispositif selon une quelconque des revendications 1 à 3, **caractérisé en ce que** le couteau respectif (30) converge en un angle aigu α, de préférence de 10° à 45°.

5. Procédé destiné à sectionner deux feuilles superposées, notamment des feuilles en gaine, en utilisant un dispositif selon une quelconque des revendications 1 à 4, **caractérisé en ce que** l'outil supérieur (18) et l'outil inférieur (20) sont appliqués sur la surface de la feuille, chacun avec les fourches à grappin (22, 26) ouvertes, **en ce que** les fourches à grappin (22, 26) sont transférées en une position fermée, les couteaux respectifs (30) étant enfoncés dans la surface des feuilles superposées et **en ce que** l'outil supérieur (18) et l'outil inférieur (20) sont retirés l'un de l'autre pour sectionner les deux feuilles superposées.
